(19) Europäisches Patentamt
European Patent Office
Office européen des brevets

(11) **EP 2 163 596 A1**

(12) **DEMANDE DE BREVET EUROPEEN**

(43) Date de publication:
**17.03.2010 Bulletin 2010/11**

(51) Int Cl.:
***C10G 3/00*** *(2006.01)*   ***C10G 47/00*** *(2006.01)*
***C10G 69/04*** *(2006.01)*

(21) Numéro de dépôt: **09169953.8**

(22) Date de dépôt: **10.09.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.09.2008 FR 0805036**

(71) Demandeur: **Total Raffinage Marketing**
**92800 Puteaux (FR)**

(72) Inventeurs:
• **Gueret, Christophe**
  **76600 LE HAVRE (FR)**
• **Mayeur, Vincent**
  **76330 NOTRE DAME DE GRAVENCHON (FR)**

(74) Mandataire: **Largeau, Béatrice et al**
**Cabinet Jolly**
**54, rue de Clichy**
**75009 Paris (FR)**

(54) **Procédé de prétraitement de FCC par hydrocraquage doux incluant une dilution de la charge par une charge d'origine biologique**

(57) L'invention concerne un procédé comprenant les étapes comprenant les étapes consistant à effectuer un hydrocraquage doux opéré sous une pression de 20 à 120 bars et à une température comprise entre 300 et 500°C sur une charge hydrocarbonée comprenant ou consistant en une charge d'origine pétrolière, comprenant, ou constituée par, une coupe distillat sous vide et/ou une huile désasphaltée, dont au moins 85 % en poids bout au dessus de 370°C, et une charge d'origine biologique comprenant des composants du type huiles végétales et/ou graisses animales, pour produire du gazole et un effluent ayant un point initial d'ébullition supérieur à 330°C au sens de la distillation simulée selon la norme ASTM D2887, et effectuer un craquage catalytique (FCC) d'une composition comprenant ou constitué par ledit effluent et une installation permettant de réaliser ce procédé.

FIG.1

**Description**

La présente invention se situe dans le domaine technique du craquage des charges d'hydrocarbures. Plus particulièrement, l'invention concerne un procédé dans lequel on dilue une coupe distillat sous vide et/ou une huile désasphaltée, par une coupe d'origine biologique du type huiles végétales et/ou graisses animales, avant son traitement en hydrocraquage doux, cette étape d'hydrocraquage doux étant préalable au traitement par FCC ( « Fluid Catalytic Cracking » - Craquage Catalytique Fluide).

L'hydrocraquage doux se révèle être une application particulièrement intéressante en prétraitement de FCC. Il est en effet bien connu que lorsqu'un hydrocraquage doux est mis en oeuvre en amont du FCC, la teneur en soufre dans les essences de FCC ainsi que les émissions de NOx et de SOx sont notablement réduites.

La réduction de la teneur en soufre des essences de FCC est primordiale puisqu'elles constituent une large part du pool essence d'une raffinerie. De plus, l'évolution vers des normes plus sévères concernant la qualité des carburants impose de s'orienter vers des schémas innovants permettant, entre autres, d'atteindre des teneurs en soufre inférieures à 10 ppm dans les essences et dans les gazoles (en particulier dans les spécifications pour l'Union Européenne). Outre la teneur en soufre, il est également important et intéressant de réduire les teneurs en azote, en aromatiques et en polyaromatiques.

Différents procédés d'hydrodésulfuration sont bien connus et l'hydrocraquage doux s'applique au traitement de charges de type distillat sous vide (DSV sous forme abrégée) ou VGO (correspondant au terme anglais Vacuum Gas Oil) ainsi qu'aux huiles désasphaltées (DAO). Ces charges contiennent des teneurs élevées en soufre et en composés azotés.

Cependant, ces procédés de l'art antérieur conduisent en général à une coupe gazole dont l'origine est entièrement fossile. Or, tant en vue de diminuer les émissions de gaz à effet de serre que pour être conforme aux normes et/ou directives concernant l'environnement, il est souhaitable d'utiliser des composés d'origine biologique, notamment d'origine agricole, dans les carburants.

Par exemple, la directive européenne 2003/30/CE vise notamment à promouvoir l'utilisation de biocarburants. Dans les transports, la communauté européenne a adopté un objectif de part de biocarburants de 5,75% du PCI (Pouvoir Calorifique Inférieur) des carburants en 2010. C'est-à-dire que la quantité de biocarburant présente dans le mélange doit procurer 5,75% du PCI du mélange.

Actuellement, le gouvernement français a instauré une taxe : la TGAP (Taxe Générale des Activités Polluantes), qui concerne les carburants mis à la consommation sur le territoire français. Les carburants soumis à cette taxe sont le « SP95 », le « SP98 » et le « Gazole Moteur ». L'objectif de cette taxe est d'inciter l'incorporation de Biocarburant d'origine agricole en augmentant progressivement le %PCI (Pouvoir Calorifique Inférieur) de 1,75% en 2006 à 7,00% en 2010.

Cet ajout est réalisé sur la base énergétique et l'origine « Bio » des produits incorporés. Ainsi, l'ETBE (éthyl tertiobutyléther) voit son taux réduit puisqu'il ne contient que 47% en poids d'éthanol d'origine agricole et un PCI inférieur à l'essence.

Pour les gazoles moteurs, les biocarburants les plus couramment utilisés sont les esters d'huile végétale, comme l'ester méthylique d'huile de colza (EMC).

Ces gazoles moteurs sont en général obtenus par mélange du biocarburant au gazole moteur après traitement de ce dernier. Ces mélanges sont ainsi souvent effectués par les distributeurs, juste avant la mise en distribution du carburant.

Les mélanges obtenus à partir d'esters méthyliques d'huile végétale présentent l'avantage d'un cétane conforme à la norme, mais leur densité est très supérieure à la spécification de la norme (supérieure à 800 kg/m$^3$), ce qui entraîne des difficultés de formulation à des taux d'incorporation élevés.

On connaît déjà des procédés de raffinage de la biomasse qui ont été élaborés pour produire des biocarburants. Ainsi, les documents US 4 992 605, US 5 705 722 et SE 520 633 décrivent des procédés d'hydrotraitement des triglycérides formant les huiles végétales.

On connaît également des procédés d'hydrocraquage d'huiles végétales permettant d'obtenir des gazoles. Ainsi les documents FR 2 607 803 et US 5 233 109 décrivent des procédés d'hydrocraquage des triglycérides formant les huiles végétales.

On connaît également des procédés d'hydrotraitement d'une charge d'origine pétrolière de type gazole mélangée à une charge d'huiles végétales et/ou de graisses animales. Par exemple, le document EP 1 693 432 décrit un procédé d'hydrotraitement d'une charge d'origine pétrolière mélangée à de l'huile végétale.

Cependant, les procédés décrits dans l'art antérieur peuvent présenter un coût important, être insuffisamment performants, par exemple en terme de rendement et/ou présenter un bilan écologique faible, notamment vis-à-vis de la consommation énergétique.

Les procédés de l'art antérieur envisagent en général des installations dédiées ce qui implique une faible flexibilité de l'utilisation de ces installations. En effet, les procédés d'hydrotraitement et d'hydrocraquage d'huiles végétales pures nécessitent la construction d'unités spécifiques, et les produits doivent être ultérieurement mélangés aux gazoles ou essences obtenus par raffinage des produits pétroliers.

Tout particulièrement, les procédés de l'art antérieur présentent un problème lié à la désactivation des catalyseurs, en particulier par des produits obtenus à partir de la charge d'origine biologique, comme le monoxyde de carbone.

La présente invention a donc pour but de résoudre en tout ou partie les inconvénients évoqués ci-dessus.

A cet effet, l'invention décrit un procédé comprenant les étapes consistant à :

- effectuer un hydrocraquage doux opéré sous une pression de 20 à 120 bars et à une température comprise entre 300 et 500°C sur une charge hydrocarbonée comprenant ou consistant en :

  - une charge d'origine pétrolière, comprenant, ou constituée par, une coupe distillat sous vide et/ou une huile désasphaltée, dont au moins 85 % en poids bout au dessus de 370°C, et
  - une charge d'origine biologique comprenant des composants du type huiles végétales et/ou graisses animales,

  pour produire du gazole et un effluent ayant un point initial d'ébullition supérieur à 330°C au sens de la distillation simulée selon la norme ASTM D2887, et
- effectuer un craquage catalytique (FCC) d'une composition comprenant ou constitué par ledit effluent.

La coupe distillat sous vide peut être un distillat sous vide issu de la distillation directe du brut ou d'un procédé de conversion tel que la cokéfaction, la viscoréduction, le FCC, ou encore tout mélange des effluents des procédés précédemment cités.

L'huile désasphaltée peut provenir d'une unité de désasphaltage. Le plus souvent, le résidu de la distillation sous vide (résidu sous vide) est désasphalté et ledit résidu désasphalté constitue l'huile désasphaltée.

La coupe distillat sous vide et/ou l'huile désasphaltée peut entrer dans la composition de la charge d'origine pétrolière pour laquelle au moins 85 % en poids présente un point d'ébullition supérieur à 370°C au sens de la distillation simulée ASTM D2887.

La Demanderesse a en effet constaté de manière surprenante que la charge d'origine biologique subissait un hydrotraitement, mais que la quasi-totalité des n-paraffines ainsi formées ne subissaient pas d'hydrocraquage. Ces n-paraffines se retrouvent donc dans les produits liquides, et très majoritairement dans la coupe gazole obtenue. En effet, les triglycérides de la charge d'origine biologique sont complètement décomposés en paraffines appartenant à l'intervalle de distillation des gazoles.

De plus, il a été constaté que les quantités de CO et $CO_2$ formées sont faibles, en comparaison aux quantités formées dans un procédé d'hydrotraitement de coupes pétrolières de type gazole en mélange avec des coupes d'origine biologique du type huiles végétales et/ou graisses animales. En effet, la décarboxylation/décarbonylation des molécules d'acide gras contenues dans les triglycérides, provoque l'émission de gaz CO, $CO_2$ diminuant la pression partielle d'hydrogène. De plus, outre les problèmes de sécurité sur les personnes, le CO est un inhibiteur réversible de l'activité désulfurante du catalyseur d'hydrotraitement et d'hydrocraquage. Or, la mise en oeuvre du procédé selon l'invention ne conduit qu'à une faible formation des gaz CO et $CO_2$ de telle sorte que le gaz de recycle n'en contient qu'une faible quantité, et ce qui peut permettre aux catalyseurs d'hydrotraitement et d'hydrocraquage de conserver une bonne activité catalytique.

La demanderesse a constaté, de façon surprenante, que le procédé selon l'invention permet d'améliorer les propriétés de la coupe gazole sortant du procédé de prétraitement de FCC (après une étape de séparation coupe gazole/ charge de FCC), en outre en terme de teneur en soufre, de densité (mesurée à 15°C) et d'indice de cétane. Ainsi, et sans avoir besoin d'un hydrotraitement ultérieur, un gazole répondant aux spécifications actuelles peut être obtenu.

Par ailleurs, la coupe gazole obtenue contient une teneur en biocarburant importante, présentant un meilleur indice de cétane et une plus faible densité. Le procédé selon l'invention peut donc permettre d'introduire du biocarburant dans le gazole produit, sans modification notable des unités d'hydrocraquage doux existantes.

Un autre avantage du procédé est de conduire à de meilleures performances du procédé de prétraitement de la charge de FCC, de par le fait de diluer la charge conventionnelle du procédé de prétraitement de FCC avec une charge d'origine biologique. Ces meilleures performances en prétraitement se répercutent au niveau du FCC lui-même puisqu'il est ainsi possible d'obtenir des produits à plus faible teneur en soufre à la sortie du FCC.

Le traitement de la charge biologique conduit notamment à la production de composés, notamment le CO, qui peuvent présenter des effets inhibiteurs sur des catalyseurs.

D'autre part, la charge d'origine pétrolière peut comprendre des composés inhibiteurs de catalyseurs, notamment des réactions d'hydrotraitement (hydrodésulfuration, hydrodésazotation, hydrogénation des aromatiques, craquage), tels que l'azote, l'azote basique, et les aromatiques de la charge d'origine pétrolière. Certains composés ayant un caractère basique (par exemple l'azote basique) sont bien connus pour réduire l'activité craquante des catalyseurs acides tels que les silices-alumines ou les zéolithes.

Or, dans le cadre de l'invention, et avec un catalyseur CoMo et/ou NiMo, il a été constaté que l'effet lié au composés inhibiteur de la charge d'origine pétrolière était diminué, notamment effacé, voire plus que contrebalancé, par l'effet de dilution dû à la charge biologique. En effet, cette charge biologique permet de diminuer la quantité relative d'inhibiteur compris dans la charge pétrolière.

Ceci permet donc au procédé selon l'invention d'être effectué dans des unités « classiques » qui peuvent être utilisées dans le traitement de charges d'origine uniquement pétrolière.

Le catalyseur utilisé dans le procédé selon l'invention peut comprendre ou être constitué par un catalyseur CoMo et/ou NiMo.

Selon une variante, la charge traitée par le FCC comprend, outre l'effluent de l'hydrocraquage doux ayant un point initial d'ébullition supérieur à 330°C, une portion de VGO et/ou de DAO, en particulier provenant de la charge hydrocarbonée pour l'hydrocraquage doux.

Cela peut permettre une amélioration du point de vue de la faisabilité industrielle, par exemple en conservant ou en augmentant la quantité de VGO traité (par rapport aux procédés connus sans incorporation de charge biologique). Seule la quantité de charge traitée par le FCC diminue, ce qui peut être un avantage dans la mesure où dans certains cas il est souhaitable de diminuer la proportion d'essence obtenue.

Avantageusement, la portion du VGO et/ou DAO est telle que la charge destinée à être envoyée au FCC (mélange de ladite portion et de l'effluent de l'hydrocraquage doux ayant un point initial d'ébullition supérieur à 330°C) présente une teneur en soufre inférieure ou égale à 2500 ppm, notamment inférieure ou égale à 1500 ppm, voire inférieure ou égale à 1000 ppm.

L'invention concerne également une installation utilisable pour la mise en oeuvre du procédé selon l'invention, c'est à dire pour réaliser un procédé de prétraitement d'une charge de FCC.

Cette installation comprend, de façon générale :

- une zone d'hydrocraquage doux (7) contenant un catalyseur et munie d'une conduite (5) pour l'introduction de l'hydrogène, d'une conduite (6) pour l'introduction de la charge d'origine pétrolière, qui est un distillat sous vide et/ou une huile désasphaltée dont 85% poids au moins bout au dessus de 370°C, et d'une conduite (13) pour l'introduction d'une charge d'origine biologique du type huiles végétales et/ou graisses animales, et d'une conduite (8) pour l'évacuation de l'effluent,
- une zone de séparation (9) munie d'une conduite pour l'introduction dudit effluent et d'au moins une conduite (14) pour l'évacuation d'une coupe ayant un point initial d'ébullition supérieur à 330°C, et d'une conduite (10) pour séparer une coupe dont l'intervalle de distillation est compris entre 130 et 390°C,
- une unité (non représentée sur la figure), située en aval de la zone de séparation (9), pour le traitement et la séparation du monoxyde de carbone présent dans la phase vapeur de l'effluent.
- une zone (15) de craquage catalytique (FCC) munie d'une conduite (14) pour l'introduction de ladite coupe à point initial d'ébullition supérieur à 330°C, d'au moins une conduite (16) pour la sortie d'un LCO et d'au moins une conduite (17) pour la sortie d'un HCO,

Plus précisément, cette installation comporte de façon générale : une colonne de distillation atmosphérique (2) d'un pétrole brut munie d'une conduite (1) pour l'introduction d'un pétrole brut, d'au moins une conduite pour le soutirage d'une fraction gazole et d'une conduite (3) pour le soutirage du résidu atmosphérique,

- une colonne de distillation sous vide (4) munie d'une conduite (3) pour l'introduction dudit résidu atmosphérique et d'au moins une conduite (6) pour le soutirage d'un distillat sous vide et d'une conduite (11) pour le soutirage du résidu sous vide,
- une zone d'hydrocraquage doux (7) contenant un catalyseur et munie d'une conduite (5) pour l'introduction de l'hydrogène, d'une conduite (6) pour l'introduction de la charge d'origine pétrolière qui est un distillat sous vide et/ou une huile désasphaltée dont 85% poids au moins bout au dessus de 370°C et au moins 95% poids de ladite charge d'origine pétrolière bout en dessous de 650°C, et d'une conduite (13) pour l'introduction d'une charge d'origine biologique du type huiles végétales et/ou graisses animales, et d'une conduite (8) pour l'évacuation de l'effluent,
- une zone de séparation (9) munie d'une conduite pour l'introduction dudit effluent et d'au moins une conduite (14) pour l'évacuation d'une coupe ayant un point initial d'ébullition supérieur à 330°C, et d'une conduite (10) pour séparer une coupe dont l'intervalle de distillation est compris entre 130 et 390°C.
- une unité (non représentée sur la figure), située en aval de la zone de séparation (9), pour le traitement et la séparation du monoxyde de carbone présent dans la phase vapeur de l'effluent.
- une zone (15) de craquage catalytique (FCC) munie d'une conduite (14) pour l'introduction de ladite coupe à point initial d'ébullition supérieur à 330°C, d'au moins une conduite (16) pour la sortie d'un LCO et d'au moins une conduite (17) pour la sortie d'un HCO.

Selon un mode de réalisation, la charge d'origine biologique est mélangée à la charge d'origine pétrolière avant son introduction dans le réacteur d'hydrocraquage doux.

La forte exothermicité de l'hydrotraitement des triglycérides de la biomasse est alors contrôlée par la présence de la charge d'origine pétrolière, ce qui permet d'éviter de modifier le réacteur de prétraitement par exemple à des taux d'incorporation inférieurs à 30%.

Par ailleurs, l'exothermicité liée à l'hydrotraitement de la charge d'origine biologique permet d'améliorer le bilan thermique de l'unité d'hydrocraquage selon l'invention. En effet, l'exothermicité liée à l'hydrotraitement de la charge d'origine biologique permet, en outre, de diminuer la température d'entrée du réacteur de prétraitement tout en conservant une température moyenne réactionnelle équivalente, dans ce réacteur de prétraitement. Par température d'entrée, on entend la température à laquelle les fluides entrent dans le réacteur de prétraitement. La température moyenne réactionnelle est la température moyenne à l'intérieur du réacteur.

Selon un autre mode de réalisation de l'invention, la charge d'origine pétrolière est injectée dans une première zone catalytique de l'unité d'hydrocraquage doux et la charge d'origine biologique est injectée dans une deuxième zone catalytique de l'unité d'hydrocraquage doux située en aval de la première zone catalytique.

Ainsi, l'hydrodéoxygénation de la charge d'origine biologique a lieu en aval de l'hydrodésulfuration de la coupe pétrolière de sorte que cette dernière peut être menée sans l'effet inhibiteur du CO et des autres gaz formés lors de la réaction d'hydrodéoxygénation des triglycérides de la charge d'origine biologique, et de sorte que la pression partielle d'hydrogène ne sera pas abaissée par la réaction d'hydroraffinage de la charge d'origine biologique, ce qui permet de maintenir une activité catalytique élevée en hydrodésulfuration.

L'introduction en aval de la charge d'origine biologique permet également de réaliser l'hydrodéoxygénation de celle-ci dans des conditions plus favorables (pression partielle d'hydrogène plus faible, température plus faible, ...) qui limitent la formation de $CH_4$ et $H_2O$, ce qui diminue la consommation d'$H_2$ et l'exothermicité de la réaction.

Préférentiellement, le taux de la charge d'origine biologique du type huiles végétales et/ou de graisses animales peut aller jusqu'à 30% en masse, c'est-à-dire que la charge d'origine biologique peut constituer jusqu'à 30% en poids de la charge totale composée de la charge d'origine pétrolière et de la charge d'origine biologique.

Encore plus préférentiellement, le taux de la charge d'origine biologique du type huiles végétales et/ou de graisses animales est inférieur ou égal à 15 % en poids.

La charge d'origine pétrolière est avantageusement choisie parmi les distillats de distillation sous vide, tel que le VGO (« vacuum gas oil » - Gazole sous vide), les gazoles issus de procédé de conversion et les résidus désasphaltés.

Les huiles végétales ou animales utilisées selon l'invention sont composées majoritairement de triglycérides d'acides gras (>90% en poids), les longueurs de chaîne dépendant de la nature de l'huile utilisée.

Les huiles végétales peuvent en particulier être l'huile de palme, l'huile de soja, l'huile de colza, l'huile de tournesol, l'huile de lin, l'huile de son de riz, l'huile de maïs, l'huile d'olive, l'huile de ricin, l'huile de sésame, l'huile de pin, l'huile d'arachide, l'huile de palmiste, l'huile de coco, l'huile de babasu, de préférence l'huile de palme, , ou un mélange de deux ou plusieurs de ces huiles. Ces huiles vont produire essentiellement des paraffines en C15 à C18.

Une façon particulièrement avantageuse d'utiliser l'invention, est d'utiliser préférentiellement l'huile de soja ou toute autre huile végétale ou d'origine animale susceptible de produire par hydrotraitement un maximum de paraffines en C 15 à C 18, de préférence en C 15 ou C16, de façon à induire une augmentation importante de l'indice de cétane des charges produites tout en diminuant le plus possible la densité.

Comme graisses animales, on peut par exemple utiliser de la graisse de poisson.

Toutefois, l'incorporation d'une charge d'origine biologique à la charge d'origine pétrolière conduit à la formation de nouveaux produits (CO, $CO_2$, $H_2O$) qui vont se retrouver dans ces gaz recyclés, en sortie de la zone de séparation (9). Il peut alors être avantageux de prévoir des condenseurs afin d'éliminer l'eau et/ou une unité de traitement et de séparation du monoxyde de carbone produit.

Avantageusement, le procédé selon l'invention comprend un traitement de gaz de recycle avant sa réinjection dans le réacteur d'hydrocraquage doux. Au cours de ce traitement supplémentaire, on traite le monoxyde de carbone présent dans ledit gaz de recycle et on le sépare dudit gaz de recycle avant sa réinjection dans le réacteur d'hydrocraquage doux.

Une telle unité de traitement et de séparation du monoxyde de carbone produit peut être une unité de conversion du monoxyde de carbone en dioxyde de carbone selon la réaction :

$$CO + H_2O \rightarrow CO_2 + H_2$$

Le dioxyde de carbone résultant peut alors être facilement éliminé, par exemple, par un lavage aux amines, tandis que l'on peut récupérer l'hydrogène produit pour le réinjecter dans le réacteur ou le mélanger au gaz riche en hydrogène mélangé à la charge.

Une telle unité de conversion du CO peut être placée en sortie du gaz séparé par la zone de séparation (9).

Le mélange de la charge d'origine pétrolière et de la charge d'origine biologique telles que décrites précédemment est traité par le procédé de prétraitement de FCC (ou hydrocraquage doux) bien connu de l'homme du métier. L'hydrogène est apporté en phase gazeuse au niveau du réacteur par une conduite différente de celle de la charge.

On opère habituellement sous une pression de 20 à 120 bars, souvent de 20 à 100 bars et le plus souvent de 40 à 90 bars ou de 30 à 70 bars, à une température comprise entre 300 et 500°C, et de préférence comprise entre 350 et 450°C.

La vitesse spatiale horaire (WH) et la pression partielle d'hydrogène sont choisies en fonction des caractéristiques de la charge à traiter et de la conversion souhaitée. Le plus souvent, la WH se situe dans une gamme allant de 0,1 à 10 h$^{-1}$, et de préférence d'environ 0,2 à environ 5 h$^{-1}$. La quantité totale d'hydrogène mélangé à la charge (incluant la consommation chimique et la quantité recyclée) est habituellement d'environ 100 à environ 5000 Nm3 d'hydrogène par m$^3$ de charge liquide et le plus souvent de 100 à 2000 Nm$^3$/m$^3$. Généralement, elle est d'au moins 200 Nm$^3$/m$^3$ et de préférence de 200 à 1500 Nm$^3$/m$^3$. La conversion nette en produits bouillant en dessous de 370°C est généralement comprise 5 entre 5 et 50 % poids, avantageusement entre 10 et 45% poids.

L'effluent du procédé d'hydrocraquage doux est séparé en une fraction gazole pour laquelle l'intervalle de distillation est compris entre 130 et 390°C, et une fraction ayant un point initial d'ébullition au dessus de 330°C traitée en aval par le procédé de FCC. Il est également obtenu, lors de la séparation, en outre des fractions essences.

Généralement, la fraction ayant un point initial d'ébullition au dessus de 330°C est traitée en aval par le procédé de FCC mais celle-ci pourrait également, par exemple, être envoyée vers le pôle fioul pour produire un fioul à très basse teneur en soufre.

On peut utiliser un catalyseur classique d'hydroconversion comprenant, sur un support amorphe, au moins un métal ou composé de métal ayant une fonction hydrodéshydrogénante.

Ce catalyseur peut être un catalyseur comprenant des métaux du groupe VIII, par exemple du nickel et/ou du cobalt, le plus souvent en association avec au moins un métal du groupe VIB, par exemple du molybdène et/ou du tungstène. On peut par exemple employer un catalyseur comprenant de 0,5 à 10 % poids de nickel (exprimé en oxyde de nickel NiO) et de 1 à 30% poids de molybdène, de préférence de 5 à 20% poids de molybdène (exprimé en oxyde de molybdène MoO$_3$) sur un support minéral amorphe. La teneur totale en oxydes de métaux des groupes VI et VIII dans le catalyseur est généralement comprise entre 5 et 40 % poids et préférentiellement entre 7 et 30 % poids. Le rapport pondéral (exprimé sur la base des oxydes métalliques) entre métal (métaux) du groupe VI et métal (métaux) du groupe VIII est, en général, d'environ 20 à environ 1, et le plus souvent d'environ 10 à environ 2. Le support sera, par exemple, choisi dans le groupe formé par l'alumine, la silice, les silices-alumines, la magnésie, les argiles et les mélanges d'au moins deux de ces minéraux.

Ce support peut également renfermer d'autres composés et par exemple, des oxydes choisis parmi l'oxyde de bore, la zircone, l'oxyde de titane, l'anhydride phosphorique. On utilise le plus souvent un support d'alumine et préférentiellement de l'alumine η ou γ.

Le catalyseur peut également contenir un élément promoteur tel que du phosphore et/ ou du bore. Cet élément peut avoir été introduit dans la matrice ou de préférence avoir été déposé sur le support. Du silicium peut également être déposé sur le support, seul ou avec le phosphore et/ou le bore. De manière préférée, les catalyseurs contiennent du silicium déposé sur un support tel que l'alumine, éventuellement avec du phosphore et/ou du bore déposé(s) sur le support, et contenant aussi au moins un métal du groupe VIII (Ni, Co) et au moins un métal du groupe VIB (Mo, W). La concentration en ledit élément est habituellement inférieure à environ 20% poids (sur la base oxyde) et le plus souvent inférieure à environ 10 %. La concentration en trioxyde de bore (B$_2$O$_3$) est habituellement d'environ 0 à environ 10% poids.

Un autre catalyseur est une silice-alumine comprenant au moins un métal du groupe VIII et au moins un métal du groupe VIB.

Un autre type de catalyseur utilisable est un catalyseur contenant au moins une matrice, au moins une zéolithe Y et au moins un métal hydro-déshydrogénant.

Les matrices, métaux, éléments additionnels décrits précédemment peuvent également entrer dans la composition de ce catalyseur.

Des zéolithes γ avantageuses sont décrites dans la demande internationale PCT brevet WO 00/71641, et les demandes de brevet EP 0 911 077 ainsi que US 4,738,940 et US 4,738,941.

Certains composés ayant un caractère basique, comme l'azote basique, sont bien connus pour réduire significativement l'activité craquante des catalyseurs acides tels que les silices-alumines ou les zéolithes. Plus le catalyseur aura un caractère acide prononcé (silice-alumine, voire zéolithe), plus la diminution de la concentration en composés basiques par dilution aura un effet bénéfique sur la réaction d'hydrocraquage doux.

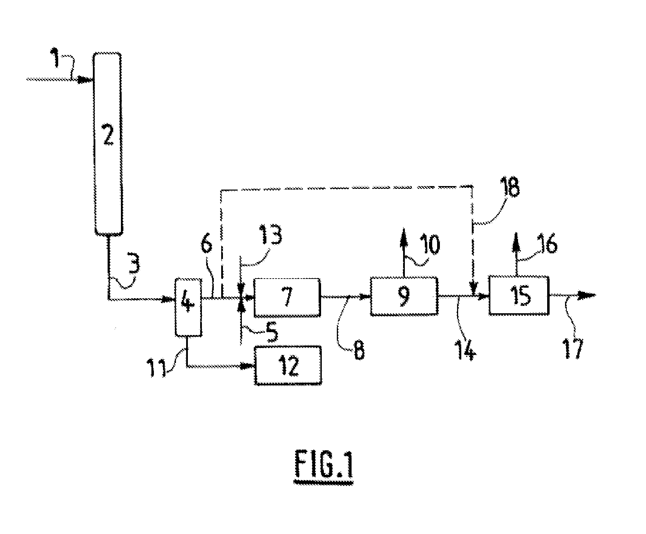

La figure 1 décrit un mode de réalisation de l'invention dans lequel l'effluent obtenu après l'hydrocraquage doux est envoyé dans le FCC ou en variante est envoyé avec du VGO. Ce mode de réalisation est donné à titre d'exemple et ne présente aucun caractère limitatif.

Le pétrole brut est envoyé par un conduit (1) dans une colonne de distillation atmosphérique (2). De cette colonne de distillation, on soutire un résidu atmosphérique par une conduite (3). Celui-ci est envoyé vers une distillation sous vide (4) dont le résidu sous vide est extrait par un conduit (11) alimentant un procédé de conversion (12), par exemple un coker. Le distillat de la distillation sous vide (4) est soutiré par un conduit (6) et envoyé vers un procédé d'hydrocraquage doux (7), alimenté en hydrogène par un conduit (5). Dans le conduit (6) est également introduit, par une conduite (13), une charge d'origine biologique du type huiles végétales et/ou graisses animales, représentant jusqu'à 30% en poids de la charge totale passant dans le conduit (6).

L'effluent (8) du procédé d'hydrocraquage doux (7) constitue, après différentes étapes de séparation représentées par le bloc (9) visant à séparer une fraction gazole dont l'intervalle de distillation est compris entre 130 et 390°C, extraite par un conduit (10), et une fraction extraite par un conduit (14) ayant un point initial d'ébullition supérieur à 330°C pouvant avantageusement constituer la charge du procédé FCC représenté par le bloc (15).

La charge amenée au procédé FCC (15) peut également comprendre du VGO (18 - représenté en pointillé) provenant du distillat de la distillation sous vide (4) véhiculé par le conduit (6).

La zone de craquage catalytique (FCC) est munie d'au moins une conduite (16) pour la sortie d'un gazole léger de craquage catalytique (LCO selon le terme anglais) et d'au moins une conduite (17) pour la sortie d'un gazole lourd de craquage catalytique (HCO selon le terme anglais).

Par ailleurs, le résidu sous vide est avantageusement introduit en totalité ou en partie dans une zone de conversion (12) par la conduite (11).

La figure 1 est bien entendue présentée à titre illustratif de l'invention.

## EXEMPLES :

Exemples 1 comparatif, 2 et 3 selon l'invention :

Trois charges ont été traitées dans une unité pilote d'hydrocraquage doux. La première est constituée d'un distillat sous vide (VGO). La deuxième et la troisième charge sont constituées d'un mélange VGO et d'huiles végétales.

La charge de VGO a été traitée sans incorporation d'huiles végétales dans l'exemple 1, qui sert de référence, et avec 10 % et 30 % en poids d'huile de soja dans l'exemple 2 et l'exemple 3 respectivement.

Les conditions d'expérimentation sont détaillées ci-après.

### Installation

Le procédé selon l'invention a été testé sur une unité pilote en lit fixe isotherme contenant un catalyseur de type CoMo, avec un écoulement à co-courant des flux de liquides et de gaz.

Le profil de température des réacteurs est constant, les réacteurs fonctionnant en mode isotherme.

L'unité pilote ne possède pas de recyclage des gaz et la charge est traitée en une seule passe, c'est-à-dire en « Once through » selon les spécialistes.

La pureté de l'hydrogène injecté dans le pilote est de 100%.

### Charge étudiée

Les caractéristiques de la charge VGO et de l'huile de soja sont reportées dans les tableaux 1 et 2 respectivement.

L'huile de soja utilisée est de qualité alimentaire.

L'huile de soja présente la particularité de contenir une proportion élevée de chaînes de 18 atomes de carbone : les chaînes en C18 représentent 87,3% en poids par rapport au poids total des acides contenus dans l'huile, les chaînes en C16 représentent 11,3% en poids par rapport au poids total des acides contenus dans l'huile. Par conséquent, l'hydrogénation de triglycérides de l'huile de soja devrait conduire à la formation de chaînes paraffiniques en C18 (et/ou C17 en cas de décarbonylation ou de décarboxylation), et en plus faible proportion, en C16 et/ou C15.

**Tableau 1 :** caractéristiques de la charge VGO

| | |
|---|---|
| Densité à 15°C | 0,929 |
| Teneur en soufre (% en poids) | 2,09 |
| Teneur en azote (ppm) dont teneur en azote basique | 1492 564 |
| Point d'écoulement (°C) | -12 |
| Température de distillation (°C, ASTM D2887) | |

(suite)

| | |
|---|---|
| 5% | 351 |
| 30% | 421 |
| 50% | 455 |
| 95% | 559 |
| 99% | 595 |
| Teneur en hydrogène (% poids) | 11,97 |
| Teneur en polyaromatiques (% en poids) | 45,3 |
| Teneur totale en aromatiques (% en poids) | 63,2 |
| Composés polaires : résines (% en poids) | 3,4 |
| Asphaltènes (ppm) | < 500 |
| Ni (ppm) | 0,2 |
| V (ppm) | 0,7 |

**Tableau 2 :** caractéristiques de l'huile de soja

| | | |
|---|---|---|
| Densité à 15°C (calculée) | | 0,9204 |
| Composition en acide (pourcentages en poids) | | |
| Acide laurique | 12 : 0 | |
| Acide myristique | 14 : 0 | 0 |
| Acide palmitique | 16 : 0 | 0,1 |
| Acide palmitoléique | 16 : 1 | 4,8 |
| Acide margarique | 17 : 0 | 0,3 |
| | 17 : 1 | 0,1 |
| Acide stéarique | 18 : 0 | 0 |
| Acide oléique | 18 : 1 | 1,7 |
| Acide linoléique | 18 : 2 | 61,3 |
| Acide linolénique | 18 : 3 | 20,4 |
| Acide arachidique | 20 : 0 | 8,9 |
| Acide gondoïque | 20 : 1 | 0,6 |
| | | 1,2 |
| GPC : | | |
| Acides gras libres | | 0,2 |
| Triglycérides | | 97,8 |
| Teneur en éléments (ppm) | | |
| Azote | | 6 |
| Phosphore | | < 5 |
| Calcium | | < 2 |
| Cuivre | | < 1 |
| Fer | | < 1 |
| Magnésium | | < 1 |
| Sodium | | < 1 |
| Chlore | | < 5 |
| Teneur organique | | |
| Carbone (% poids) | | 77,68 |
| Hydrogène (% poids) | | 11,46 |
| Oxygène (% poids) | | 11,24 |

Le tableau 3 indique la densité et la teneur en soufre et en azote des charges des exemples 1 à 3.

**Tableau 3 :** caractéristiques des charges des exemples 1 à 3

|  | Densité à 15°C | Teneur en soufre (% en poids) | Teneur en azote (ppm) | Teneur en Huile végétale (% en poids) |
|---|---|---|---|---|
| **Exemple 1** | 0,929 | 2,09 | 1492 | 0 |
| **Exemple 2** | 0,928 | 1,87 | 1340 | 10 |
| **Exemple 3** | 0,926 | 1,45 | 1042 | 30 |

_Conditions opératoires_

Les conditions opératoires sont reportées dans le tableau 4.

**Tableau 4 :** Conditions opératoires

|  | Réacteur d'hydrocraquage doux |
|---|---|
| Pression partielle d'$H_2$ sortie réacteur (bar) | 80 |
| $H_2$/HC (N1/1) | 400 |
| VVH ($h^{-1}$) | 0,8 |
| Température (°C) | 390 |

La température du catalyseur est choisie pour avoir un taux de désulfuration (HDS) de 99,6% défini par:

$$HDS = 100 * \frac{(S_{Ch\arg e} - S_{\Pr oduit})}{S_{Ch\arg e}}$$

Celle-ci se situe dans la plage 350-420°C.

_Qualité des produits_

L'effluent sortant du réacteur est séparé en une phase gazeuse et une phase liquide à température et pression ambiante par un jeu de séparateurs. Ensuite la phase liquide est strippée en continu à l'azote pour enlever l'$H_2$S résiduel. La phase liquide est distillée au laboratoire en une coupe Pi-150°C, une coupe 150-370°C (coupe gazole large) et une coupe 370°C + alimentant un FCC.
Le tableau 5 regroupe les rendements poids par rapport à la charge et quelques propriétés de ces coupes.

**Tableau 5 :** caractéristiques des effluents des exemples 1 à 3

|  |  | Exemple 1 | Exemple 2 | Exemple 3 |
|---|---|---|---|---|
| **Pi - 150°C** | Rendement par rapport à la charge (% poids) | 2,11 | 1,95 | 1,63 |
|  | Densité à 15°C | 0,751 | 0,750 | 0,749 |
|  | Soufre (ppm) | 3 | 3 | 4 |

(suite)

|  |  | Exemple 1 | Exemple 2 | Exemple 3 |
|---|---|---|---|---|
| **150 - 370°C** | Rendement par rapport à la charge (% poids) | 26,79 | 32,31 | 43,35 |
|  | Densité à 15°C | 0,8749 | 0,8521 | 0,8239 |
|  | Soufre (ppm) | 59 | 44 | 35 |
|  | Point de trouble (°C) | -5 | -4 | -2 |
|  | Indice cétane calculé D4737 | 40 | 49 | 57 |
|  | GPC (triglycérides) (% poids) | 0 | < 0,05 | < 0,05 |
|  | Teneur en bio-gazole dans la coupe gazole (% poids) | 0 | 25,37 | 56,74 |
| **370°C+** | Rendement par rapport à la charge (% poids) | 69,19 | 62,27 | 48,60 |
|  | Densité à 15°C | 0,8919 | 0,8918 | 0,8920 |
|  | Soufre (ppm) | 111 | 115 | 118 |
|  | Azote (ppm) | 64 | 65 | 66 |
|  | Teneur en hydrogène (% poids) | 13,43 | 13,44 | 13 ,42 |

L'incorporation d'huile végétale en charge d'une unité d'hydrocraquage a pour conséquence d'ajouter des normales paraffines dans le produit final.

Sachant que le rendement théorique maximal en paraffines est de 84 % en poids (d'après le bilan massique), on peut avancer que les n-paraffines issues des triglycérides se retrouvent à 98 % en poids dans la coupe gazole.

La quantité de triglycérides mesurée en sortie du réacteur d'hydrocraquage doux, dans les exemples 2 et 3 est inférieure à la limite détectable de la méthode GPC (<0.05 % en poids), confirmant la décomposition des triglycérides dans le réacteur.

Ainsi, pour une même température du réacteur d'hydrocraquage doux, la densité de l'effluent 150 - 370°C, en sortie du réacteur d'hydrocraquage doux, est significativement plus faible lorsque la charge contient de l'huile de soja. Ce qui conduit à un gazole en sortie du réacteur d'hydrocraquage doux s'approchant des spécifications les plus sévères.

En effet, l'incorporation d'huile de soja dans une charge VGO entraîne des modifications des propriétés de la coupe gazole :

- augmentation de l'indice de cétane
- diminution de la densité (sort aux spécifications GO sans besoin d'hydrotraitement ultérieur)
- augmentation du point de trouble.

L'augmentation du point de trouble peut indiquer que les paraffines issues de l'huile de soja sont peu isomérisées.

Par ailleurs, l'incorporation d'huile végétale se traduit par :

- une augmentation du rendement en gazole (+ 6 % en poids pour l'exemple 2 et + 17 % en poids pour l'exemple 3 par rapport à l'exemple 1)

Les paraffines issues des triglycérides se retrouvent à 98 % en poids dans la coupe gazole et sont donc très peu craquées (l'intervalle de distillation 150-370°C correspond aux n-paraffines de C10 à C22).

On observe que la présence dans la charge du procédé de prétraitement de FCC de 10% et 30% poids d'huile de soja (exemple 2 et 3 respectivement), permet d'obtenir un gazole (coupe 150-370°C) à plus basse teneur en soufre présentant un indice de cétane plus élevé que dans l'exemple 1.

Exemples 4 comparatif et 5 selon l'invention :

Deux charges ont été traitées dans la même unité pilote d'hydrocraquage doux. La première est constituée d'un distillat sous vide (VGO). La seconde est constituée d'un mélange de VGO et d'huiles végétales.

La charge de VGO a été traitée sans incorporation d'huiles végétales dans l'exemple 4, qui sert de référence, et avec 9,5 % en poids d'huile de soja dans l'exemple 5.

Si ces exemples sont transposés à l'échelle industrielle, cela correspondrait à deux configurations qui conduisent à la même quantité de VGO convertie (ici 100t).

Dans l'exemple 5, 100 t de VGO sont soumis à un hydrocraquage doux, puis la charge résultantes est séparées en différentes fractions, le résidu 370°C + étant envoyé au FCC.

Dans l'exemple 6, 95 t de VGO et 10 tonnes d'huiles végétales sont soumis à un hydrocraquage doux, puis la charge résultantes est séparées en différentes fractions, le résidu 370°C + auquel est ajouté 5 tonnes de VGO étant envoyé ensuite au FCC.

Les conditions d'expérimentation, à l'échelle pilote, sont détaillées ci-après.

_Installation - Charge étudiée_

Idem que plus haut

Le tableau 6 indique la densité et la teneur en soufre et en azote des charges des exemples 4 et 5.

**Tableau 6 :** caractéristiques des charges alimentant l'unité d'hydrocraquage doux des exemples 4 et 5

|  | Densité à 15°C | Teneur en soufre (% en poids) | Teneur en azote (ppm) | Teneur en Huile végétale (% en poids) |
|---|---|---|---|---|
| **Exemple 4** | 0,929 | 2,09 | 1492 | 0 |
| **Exemple 5** | 0,928 | 1,89 | 1345 | 9,5 |

_Conditions opératoires_

Les conditions opératoires sont reportées dans le tableau 7.

**Tableau 7 :** Conditions opératoires dans le réacteur d'hydrocraquage doux

|  | Exemple 4 | Exemple 5 |
|---|---|---|
| Pression partielle d'H2 sortie réacteur (bar) | 80 | |
| $H_2$/HC (N1/1) | 400 | |
| VVH ($h^{-1}$) | 1,0 | 1,05 |
| Température (°C) | 362 | 395 |

_Qualité des produits_

L'effluent sortant du réacteur est séparé en une phase gazeuse et une phase liquide à température et pression ambiante par un jeu de séparateurs. Ensuite la phase liquide est strippée en continu à l'azote pour enlever l'$H_2S$ résiduel. La phase liquide est distillée au laboratoire en une coupe Pi-150°C, une coupe 150-370°C (coupe gazole large) et une coupe 370°C + alimentant un FCC.

Le tableau 8 regroupe les rendements poids par rapport à la charge et quelques propriétés de ces coupes.

**Tableau 8 :** caractéristiques des effluents de l'hydrocraquage doux dans les exemples 4 et 5

|  |  | **Exemple 4** | **Exemple 5** |
|---|---|---|---|
| **PI - 150°C** | Rendement par rapport à la charge (% poids) | 0,20 | 2,11 |
|  | Densité à 15°C | 0,749 | 0,750 |
|  | Soufre (ppm) | 2 | 3 |

(suite)

| | | | Exemple 4 | Exemple 5 |
|---|---|---|---|---|
| **150 - 370°C** | | Rendement par rapport à la charge (% poids) | 15,91 | 32,05 |
| | | Densité à 15°C | 0,8849 | 0,8530 |
| | | Soufre (ppm) | 976 | 45 |
| | | Point de trouble (°C) | -2 | -3 |
| | | Indice cétane calculé D4737 | 39 | 48,5 |
| | | GPC (triglycérides) (% poids) | 0 | <0,05 |
| | | Teneur en bio-gazole dans la coupe gazole (% poids) | 0 | 24,36 |
| **370°C+** | | Rendement par rapport à la charge (% poids) | 82,61 | 62,60 |
| | | Densité à 15°C | 0,9014 | 0,8919 |
| | | Soufre (ppm) | 1489 | 113 |
| | | Azote (ppm) | 554 | 63 |
| | | Teneur en hydrogène (% poids) | 13,15 | 13,42 |

**Tableau 9 :** caractéristiques de la charge du FCC dans les exemples 4 et 5

| | Exemple 4 | Exemple 5 |
|---|---|---|
| Débit en charge du FCC (t/h) | 82,61 | 67,36 |
| Densité à 15°C | 0,9014 | 0,8945 |
| Soufre (ppm) | 1489 | 1584 |
| Azote (ppm) | 554 | 165 |
| Teneur en hydrogène (% poids) | 13,15 | 13,32 |

Outre les avantages et les conclusions formulées dans les exemples précédents, les présents exemples montrent encore que dans les mêmes conditions qu'avec une charge classique, l'invention permet :

- d'augmenter la quantité de gazole produite,
- d'améliorer la qualité du gazole produit,
- de réduire la quantité d'essence produite en sortie du FCC par réduction de la quantité de charge traitée par le FCC
- de maintenir la quantité de soufre dans la charge de FCC à un niveau acceptable pour de ne pas perturber l'obtention d'un soufre à moins de 10 ppm en sortie de FCC, et
- d'améliorer d'autres propriétés de la charge de FCC (densité, teneur en azote et/ou teneur en hydrogène).

**Revendications**

1. Procédé comprenant les étapes consistant à :

- effectuer un hydrocraquage doux opéré sous une pression de 20 à 120 bars et à une température comprise entre 300 et 500°C sur une charge hydrocarbonée comprenant ou consistant en :

- une charge d'origine pétrolière, comprenant, ou constituée par, une coupe distillat sous vide et/ou une huile désasphaltée, dont au moins 85 % en poids bout au dessus de 370°C, et
- une charge d'origine biologique comprenant des composants du type huiles végétales et/ou graisses animales,

pour produire du gazole et un effluent ayant un point initial d'ébullition supérieur à 330°C au sens de la distillation simulée selon la norme ASTM D2887, et
- effectuer un craquage catalytique (FCC) d'une composition comprenant ou constitué par ledit effluent.

**2.** Procédé selon la revendication 1, **caractérisé en ce que** la charge traitée par le FCC comprend outre l'effluent de l'hydrocraquage doux ayant un point initial d'ébullition supérieur à 330°C, une portion de VGO et/ou de DAO, en particulier provenant de la charge hydrocarbonée pour l'hydrocraquage doux.

**3.** Procédé selon la revendication 2, **caractérisé en ce que** la charge traitée par le FCC, comprenant outre l'effluent, une portion de VGO et/ou de DAO, présente une teneur en soufre inférieure ou égale à 2500 ppm, notamment inférieure ou égale à 1500 ppm, voire inférieure ou égale à 1000 ppm.

**4.** Procédé selon l'une quelconque des revendications 1 à 3, **caractérisé en ce que** la charge d'origine biologique est mélangée à la charge d'origine pétrolière avant son introduction dans le réacteur d'hydrocraquage doux.

**5.** Procédé selon l'une quelconque des revendications 1 à 3, **caractérisé en ce que** la charge d'origine pétrolière est injectée dans une première zone catalytique de l'unité d'hydrocraquage doux et **en ce que** la charge d'origine biologique est injectée dans une deuxième zone catalytique de l'unité d'hydrocraquage doux située en aval de la première zone catalytique.

**6.** Procédé selon l'une quelconque des revendications 1 à 5, **caractérisé en ce que** la teneur de la charge hydrocarbonée en charge d'origine biologique du type huiles végétales et/ou de graisses animales est inférieur ou égal à 30 % en poids par rapport au poids total de la charge hydrocarbonée.

**7.** Procédé selon la revendication 6, **caractérisé en ce que** la teneur en charge d'origine biologique est inférieur ou égal à 15 % en poids par rapport au poids total de la charge hydrocarbonée.

**8.** Procédé selon l'une quelconque des revendications 1 à 7, **caractérisé en ce que** la charge d'origine pétrolière est choisie parmi les distillats de distillation sous vide, les gazoles issus de procédé de conversion et/ou les résidus désasphaltés.

**9.** Procédé selon l'une quelconque des revendications 1 à 8, **caractérisé en ce que** les huiles végétales sont choisies parmi l'huile de palme, l'huile de soja, l'huile de colza, l'huile de tournesol, l'huile de lin, l'huile de son de riz, l'huile de maïs, l'huile d'olive, l'huile de ricin, l'huile de sésame, l'huile de pin, l'huile d'arachide, l'huile de palmiste, l'huile de coco, l'huile de babasu, de préférence l'huile de palme, ou un mélange d'au moins deux de ces huiles.

**10.** Procédé selon l'une quelconque des revendications 1 à 9, **caractérisé en ce qu'**il comprend un traitement de gaz de recycle avant sa réinjection, notamment dans le réacteur de prétraitement, dans lequel on effectue un traitement supplémentaire au cours duquel on traite le monoxyde de carbone présent dans ledit gaz de recycle et on le sépare dudit gaz de recycle avant sa réinjection dans le réacteur d'hydrocraquage doux.

**11.** Procédé selon l'une quelconque des revendications 1 à 10, **caractérisé en ce que** le catalyseur utilisé dans l'hydrocraquage doux comprend ou est constitué de CoMo et/ou de NiMo.

**12.** Installation pour réaliser un procédé de prétraitement de charge de FCC par hydrocraquage doux avec une charge d'origine pétrolière qui est un distillat sous vide et/ou une huile désasphaltée et qui comprend :

- une zone d'hydrocraquage doux (7) contenant un catalyseur et munie d'une conduite (5) pour l'introduction de l'hydrogène, d'une conduite (6) pour l'introduction de la charge d'origine pétrolière qui est un distillat sous vide et/ou une huile désasphaltée dont 85% poids au moins bout au dessus de 370°, et d'une conduite (13) pour l'introduction d'une charge d'origine biologique du type huiles végétales et/ou graisses animales, et d'une conduite (8) pour l'évacuation de l'effluent,
- une zone de séparation (9) munie d'une conduite pour l'introduction dudit effluent et d'au moins une conduite (14) pour l'évacuation d'une coupe ayant un point initial d'ébullition supérieur à 330°C, et d'une conduite (10) pour séparer une coupe dont l'intervalle de distillation est compris entre 130 et 390°C,
- une zone (15) de craquage catalytique (FCC) munie d'une conduite (14) pour l'introduction de ladite coupe à point initial d'ébullition supérieur à 330°C, d'au moins une conduite (16) pour la sortie d'un LCO et d'au moins une conduite (17) pour la sortie d'un HCO,

comprenant, en aval de la zone de séparation (9), une unité de traitement et de séparation du monoxyde de carbone présent dans la phase vapeur de l'effluent, pour la mise en oeuvre du procédé selon la revendication 10.

13. Installation selon la revendication 12, **caractérisée en ce que** la charge traitée par le FCC comprend, outre l'effluent, une portion de VGO et/ou de DAO, en particulier provenant de la charge hydrocarbonée pour l'hydrocraquage doux.

FIG.1

| | Europäisches Patentamt European Patent Office Office européen des brevets | **RAPPORT DE RECHERCHE EUROPEENNE** | Numéro de la demande EP 09 16 9953 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2008/020048 A (BIOECON INTERNAT HOLDING N V [NL]; O'CONNOR PAUL [NL]; STAMIRES DENNIS) 21 février 2008 (2008-02-21) | 1-13 | INV. C10G3/00 C10G47/00 C10G69/04 |
| Y | * alinéas [0032], [0040], [0044], [0046]; revendications 29,32; figures 4/10,5/10 * | 1-13 | |
| | ----- | | |
| X | FR 2 886 941 A (INST FRANCAIS DU PETROLE [FR]) 15 décembre 2006 (2006-12-15) | 1-13 | |
| Y | * revendications 1,18; figures 1-4 * | 1-13 | |
| | ----- | | |
| Y | FR 2 910 486 A (INST FRANCAIS DU PETROLE [FR]) 27 juin 2008 (2008-06-27) * page 7, ligne 18 - ligne 22 * | 1-13 | |
| | ----- | | |
| Y | EP 1 693 432 A (PETROLEO BRASILEIRO SA [BR]) 23 août 2006 (2006-08-23) * alinéas [0020], [0048], [0052]; revendication 1 * | 1-13 | |
| | ----- | | DOMAINES TECHNIQUES RECHERCHES (IPC) |
| Y | WO 2007/125332 A (PETROLEO BRASILEIRO SA [BR]; BENSON JOHN EVERETT [GB]; GOMES JEFFERSON) 8 novembre 2007 (2007-11-08) * page 4, ligne 2 - ligne 4 * | 1-13 | C10G |
| | ----- | | |
| A | FR 2 910 484 A (INST FRANCAIS DU PETROLE [FR]) 27 juin 2008 (2008-06-27) * le document en entier * | 1-13 | |
| | ----- | | |
| A | FR 2 910 485 A (INST FRANCAIS DU PETROLE [FR]) 27 juin 2008 (2008-06-27) * le document en entier * | 1-13 | |
| | ----- | | |

Le présent rapport a été établi pour toutes les revendications

| Lieu de la recherche | Date d'achèvement de la recherche | Examinateur |
|---|---|---|
| La Haye | 14 janvier 2010 | Gzil, Piotr |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 09 16 9953

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-01-2010

| Document brevet cité au rapport de recherche | Date de publication | Membre(s) de la famille de brevet(s) | Date de publication |
|---|---|---|---|
| WO 2008020048 A | 21-02-2008 | CA 2660948 A1<br>EP 2064304 A2<br>KR 20090040476 A | 21-02-2008<br>03-06-2009<br>24-04-2009 |
| FR 2886941 A | 15-12-2006 | CA 2611089 A1<br>EP 1893727 A2<br>WO 2006131621 A2<br>US 2006289338 A1 | 14-12-2006<br>05-03-2008<br>14-12-2006<br>28-12-2006 |
| FR 2910486 A | 27-06-2008 | AR 064630 A1<br>EP 2106431 A2<br>WO 2008081100 A2<br>US 2008156694 A1 | 15-04-2009<br>07-10-2009<br>10-07-2008<br>03-07-2008 |
| EP 1693432 A | 23-08-2006 | AR 052794 A1<br>AT 444347 T<br>BR PI0500591 A<br>US 2006186020 A1 | 04-04-2007<br>15-10-2009<br>03-10-2006<br>24-08-2006 |
| WO 2007125332 A | 08-11-2007 | AR 060824 A1<br>BR PI0601460 A<br>CO 5820226 A1<br>EP 2021436 A1<br>US 2009301932 A1 | 16-07-2008<br>18-12-2007<br>30-11-2007<br>11-02-2009<br>10-12-2009 |
| FR 2910484 A | 27-06-2008 | AR 064469 A1<br>CN 101568621 A<br>EP 2106429 A2<br>WO 2008087269 A2<br>US 2008173570 A1 | 01-04-2009<br>28-10-2009<br>07-10-2009<br>24-07-2008<br>24-07-2008 |
| FR 2910485 A | 27-06-2008 | AR 064468 A1<br>CN 101583695 A<br>EP 2106430 A2<br>WO 2008084145 A2<br>US 2008161614 A1 | 01-04-2009<br>18-11-2009<br>07-10-2009<br>17-07-2008<br>03-07-2008 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4992605 A
- US 5705722 A
- SE 520633
- FR 2607803
- US 5233109 A
- EP 1693432 A
- WO 0071641 A
- EP 0911077 A
- US 4738940 A
- US 4738941 A